# EUROPEAN PATENT APPLICATION

(11) **EP 2 865 921 A1**
(43) Date of publication of application: **29.04.2015**
(21) Application number: 13306473.3
(22) Date of filing: 25.10.2013
(51) Int. Cl.: F16H 25/20, F16H 25/22

(54) **Compact linear drive**

(71) Applicant: NTN-SNR Roulements, 74000 Annecy (FR)
(72) Inventor: The designation of the inventor has not yet been filed
(74) Representative: Bugnion Genève

(57) **Abstract**

A linear drive (10) comprises a housing (12) forming an axial cavity (14), at least a first linear raceway (16) fixed relative to the housing (12), a carriage (22) provided with at least one guide (26) engaged with the first linear raceway (16) so as to guide the carriage (22) axially relative to the housing (12) between a first end position and a second end position, a threaded spindle (28) received in the axial cavity (14) of the housing (12), a nut (27) engaged with the threaded spindle (28) and attached to the carriage (22), a motor (30) located outside the axial cavity (14), closer to the carriage (22) in the first end position than to the carriage (22) in the second end position, and a coupling (32) for coupling the motor (30) to the threaded spindle (28). The coupling (32) is at least partially located in the axial cavity (14), axially between the nut (27) and the motor (30), and the carriage (22) in the first end position axially overlaps the coupling (32), to reduce the overall length of the linear drive (10).

## Description

### TECHNICAL FIELD OF THE INVENTION

This invention relates to a linear drive assembly e.g. for driving a machine element in a straight line.

### BACKGROUND ART

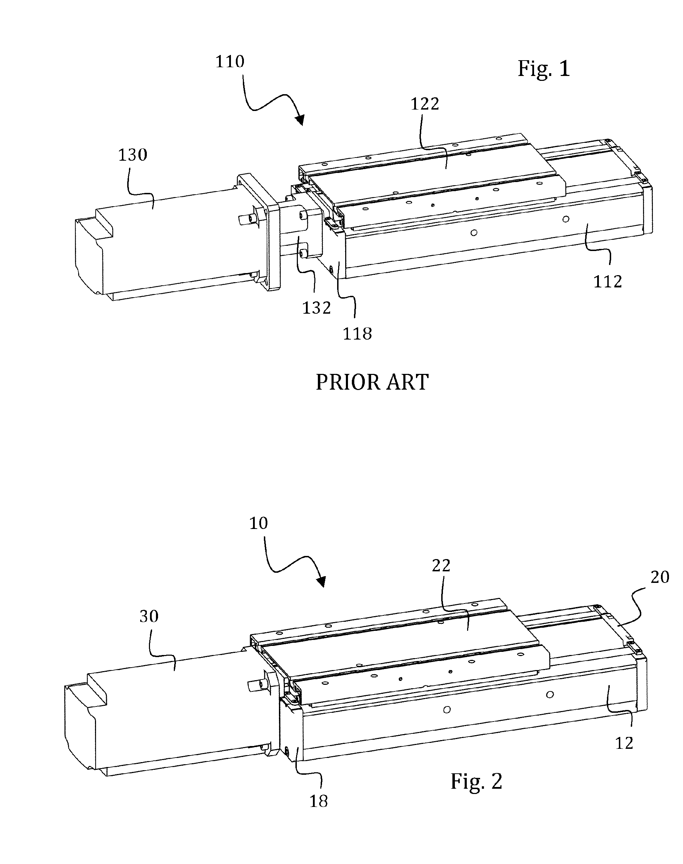

A linear drive 110 of the prior art is illustrated in Figure 1. It includes a housing 112 made of an extruded aluminium profile, a carriage 122 sliding on the housing and a ball screw mechanism (not shown) including a threaded spindle received in an axial cavity of the housing 112 and a nut secured to the carriage 122. The linear drive 110 is provided with an electric motor 130 coupled to the threaded screw via a coupling 132. The coupling 132 is located outside the housing 112, in a specific casing between the motor 130 and an end flange 118 axially closing the cavity of the housing 112. This arrangement is not optimised in terms of length.

Hence, there is a need for a more compact linear drive.

### SUMMARY OF THE INVENTION

The foregoing shortcomings of the prior art are addressed by the present invention. According to one aspect of the invention, there is provided a linear drive comprising a housing forming an axial cavity and provided with at least a first linear raceway, a carriage provided with at least at least a first guide engaged with the first linear raceway so as to guide the carriage axially relative to the housing between a first end position and a second end position, a threaded spindle received in the axial cavity of the housing, a nut engaged with the threaded spindle and attached to the carriage, a motor located outside the axial cavity, closer to the carriage in the first end position than to the carriage in the second end position, and a coupling for coupling the motor to the threaded spindle. According to the invention, the coupling is at least partially located in the axial cavity, axially between the nut and the motor, and the carriage in the first end position axially at least partially overlaps the coupling and the bearing assembly. A free space is used within the cavity of the housing for accommodating the coupling. Preferably, the two lateral guides axially overlap with the coupling in the first end position of the carriage.

According to one embodiment, the carriage has a first axial end facing the motor and a second axial end opposed to the first axial end and the nut is closer to the second end than to the first end. Hence, more room is provided for accommodating the coupling and bearing assembly in the first end position of the carriage.

According to a preferred embodiment, the coupling is a yielding coupling, i.e. a coupling that permits movement, in particular radial and/or angular movement between the connected parts while transmitting the motor torque, in particular a universal joint, Oldham coupling, or beam coupling.

According to a preferred embodiment, the linear drive further comprises at least one bearing assembly for guiding the threaded spindle in rotation relative to the housing, located in the axial cavity between the nut and the coupling, wherein the carriage in the first end position axially overlaps the coupling

The bearing assembly preferably includes one or more thrust bearings for preventing translation of the threaded spindle. The bearing assembly preferably includes one or more fixed outer annular raceways fixed relative to the housing and one or more rotary inner annular raceways fixed relative to the threaded spindle.

The coupling is preferably releasable, so that the motor can be disconnected from the threaded spindled.

According to a preferred embodiment, the coupling is located axially between the motor and the bearing assembly.

The housing can be provided with an end flange axially closing the cavity and located between the motor on the one hand and the bearing assembly and coupling on the other hand. The motor can be directly secured to the end flange.

The carriage preferably comprises a plate supported on the lateral guides and above the cavity.

The housing is preferably made of an extruded aluminium profile.

According to a preferred embodiment, the threaded spindle and nut form a ball screw mechanism.

According to a preferred embodiment, the housing is provided with a second linear raceway parallel to the first linear raceway, the carriage comprising a second guide running on the second linear raceway. The cavity is preferably located laterally between the first linear raceway and the second linear raceway.

### DESCRIPTION OF THE FIGURES

Illustrative embodiments of the invention will now be described, purely by way of examples and without limitation to the scope of the claims, and with reference to the accompanying drawings, in which:
- Fig. 1 is an isometric view of the linear drive of the prior art;
- Fig. 2 is an isometric view of a linear drive according to one embodiment of the invention in an end position;
- Fig. 3 is another isometric view of parts of the linear drive of Fig. 2;
- Fig. 4 is a cross-section of the linear drive of Fig. 2.

Corresponding reference numerals refer to the same or corresponding parts in each of the figures.

### DETAILED DESCRIPTION OF A PREFERED EMBODIMENT

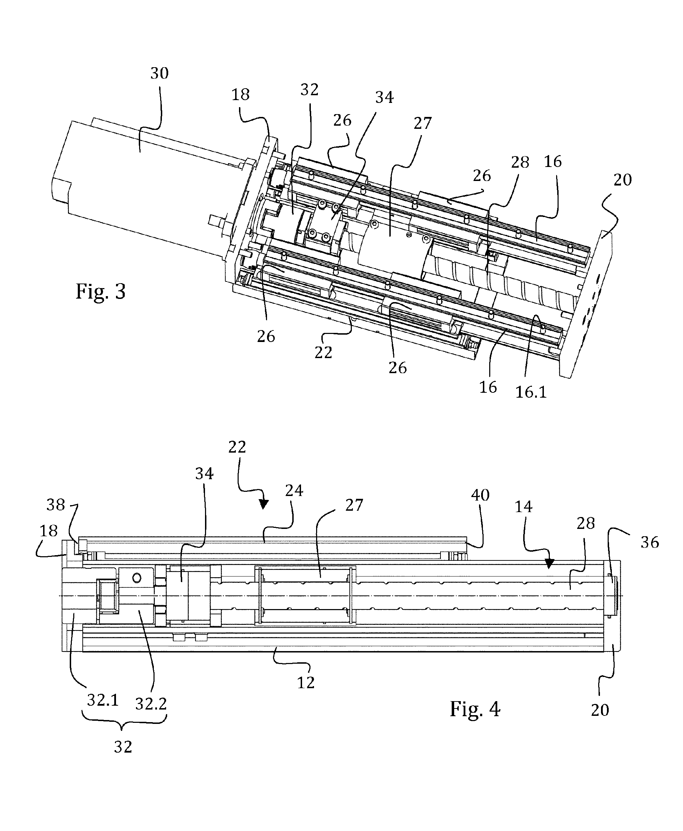

Referring to the Figs. **2** to **4****,** a linear drive **10** comprises a housing **12** made of an extruded aluminium profile, which forms an axial cavity **14** (Fig. **4****).** In Fig. **3****,** the housing has been omitted to show two parallel linear raceways **16** fixed to the housing in the cavity **14** by means of screws **16.1.** The cavity is closed at a first axial end by a first flange **18** and at the opposite end by a second flange **20.** The linear drive **10** is provided with a carriage **22** comprising a plate **24** and two pairs of lateral guides **26** each engaged with a respective one of the raceways **16** so as to slide axially relative to the housing **12** between a first end position close to the first flange **18** and a second end position close to the second flange **20.** A ball nut **27** is attached to the carriage **22** and engaged with a threaded spindle **28** received in the axial cavity **14** of the housing **12.** An electric motor **30** is located outside the housing **12,** and directly secured to the first flange **18.** The output shaft of the motor **30** is coupled to the threaded spindle **28** via a yielding coupling **32.** The threaded spindle **28** is guided in rotation relative to the housing via a first bearing assembly **34** fixed to the housing **12** close to the first flange **18** and a second bearing assembly **36** fixed to the second flange **20.**

The yielding coupling **32** can be of any type that allows transmission of the motor torque while compensating for angular errors or radial misalignments between the motor shaft and the threaded spindle **28.** The coupling **32** is located axially between the motor **30** and the first bearing assembly **34** and preferably comprises at least a first coupling part **32.1** fixed to the motor shaft and a second coupling part **32.2** fixed to the threaded spindle.

The first bearing assembly **34** is preferably of any type that allows rotation about a fixed rotation axis but prevents translation of the threaded spindle **28** parallel to the rotation axis, including e.g. one or more thrust bearings, e.g. fluid film bearings or roller bearings, preferably a combination of two angular contact ball bearings. The first bearing assembly **34** may have one or more fixed outer annular raceways formed directly in the housing or preferably in one or more outer rings fixed to the housing, and one or more inner annular raceways directly formed on the threaded spindle or on one or more inner rings fixed to the threaded spindle.

The coupling **32** and the first bearing assembly **34** are both located in the axial cavity **14,** laterally between the linear raceways **16,** axially between the nut **27** and the motor **30.** In the first end position illustrated in the Figs, the carriage **22** axially overlaps the coupling **32** and the first bearing assembly **34.**

The carriage **22** has a first axial end **38** facing the motor **30** and a second axial end **40** opposed to the first axial end **38.** As illustrated in the figures, the nut **27** is closer to the second axial end **40** than to the first axial end **38,** to leave enough space for the coupling **32** and first bearing assembly **34** in the first end position of the carriage **22.** In the first end position of the carriage illustrated in Fig. **4****,** the lateral guides **26** axially overlaps with the coupling **32** and the first bearing assembly **34.**

While a preferred embodiment of the invention has been described, it is to be understood by those skilled in the art that the invention is naturally not limited to this embodiment. Many variations are possible. The linear raceway can be located outside the cavity, on an outer face of the housing. They can be integrally formed with the housing.

The guides **26** can be sliders sliding on the linear raceways **16** or can be provided with rollers rolling on the linear raceways **16.**

## Claims

1. A linear drive (10) comprising
- a housing (12) forming an axial cavity (14),
- at least a first linear raceway (16) fixed relative to the housing (12),
- a carriage (22) provided with at least one guide (26) engaged with the first linear raceway (16) so as to guide the carriage (22) axially relative to the housing (12) between a first end position and a second end position,
- a threaded spindle (28) received in the axial cavity (14) of the housing (12),
- a nut (27) engaged with the threaded spindle (28) and attached to the carriage (22),
- a motor (30) located outside the axial cavity (14), closer to the carriage (22) in the first end position than to the carriage (22) in the second end position,
- a coupling (32) for coupling the motor (30) to the threaded spindle (28),
**characterised in that** the coupling (32) is at least partially located in the axial cavity (14), axially between the nut (27) and the motor (30), and the carriage (22) in the first end position axially overlaps the coupling (32).

2. The linear drive of claim 1, **characterised in that** the first linear guide (26) axially overlaps with the coupling (32) and the bearing assembly (34) in the first end position of the carriage (22).

3. The linear drive of any one of the preceding claims, **characterised in that** the carriage (22) has a first axial end (38) facing the motor (30) and a second axial end (40) opposed to the first axial end and the nut (27) is closer to the second end (40) than to the first end (38).

4. The linear drive of any one of the preceding claims, **characterised in that** the coupling includes a yielding coupling (32).

5. The linear drive of any one of the preceding claims, **characterised in that** it further comprises at least one bearing assembly (34) for guiding the threaded spindle (28) in rotation relative to the housing (12), located in the axial cavity (12) between the nut (27) and the coupling (32), wherein the carriage (22) in the first end position axially overlaps the coupling (32).

6. The linear drive of the preceding claim, **characterised in that** the bearing assembly (34) includes one or more thrust bearings for preventing translation of the threaded spindle.

7. The linear drive of any one of the preceding claims, **characterised in that** the coupling (32) is releasable.

8. The linear drive of any one of the preceding claims, **characterised in that** the housing (12) is provided with an end flange (18) axially closing the cavity and located between the motor (30) on the one hand and the bearing assembly (34) and coupling (32) on the other hand.

9. The linear drive of the preceding claim, **characterised in that** the motor (30) is directly secured to the end flange (18).

10. The linear drive of any one of the preceding claims, **characterised in that** the carriage (22) comprises a plate (24) supported on the lateral guide (26) and above the cavity (14).

11. The linear drive of any one of the preceding claims, **characterised in that** the housing (12) is made of an extruded aluminium profile.

12. The linear drive of any one of the preceding claims, **characterised in that** the threaded spindle (28) and nut (27) form a ball screw mechanism.

13. The linear drive of any one of the preceding claims, **characterised in that** it further comprises a second linear raceway (16) fixed relative to the housing (12) parallel to the first linear raceway, the carriage (22) comprising a second guide (26) running on the second linear raceway (16).

14. The linear drive of the preceding claim, **characterised in that** the threaded spindle (28) is located laterally between the first linear raceway (16) and the second linear raceway (16).
